# DEMANDE DE BREVET EUROPEEN

(11) **EP 2 444 723 A1**
(43) Date de publication de la demande: **25.04.2012**
(21) Numéro de dépôt: 11185306.5
(22) Date de dépôt: 14.10.2011
(51) Int. Cl.: F21V 14/04, B60Q 1/076

(54) **Dispositif d'éclairage pour véhicule, avec système anti-vibration**

(30) Priorité: 21.10.2010 FR 1058598
(71) Demandeur: VALEO VISION, 93012 Bobigny Cedex (FR)
(72) Inventeur: Bakacha, Malik, 44370 Belligné (FR); Puente, Jean-Claude, 93190 LIVRY GARGAN (FR)

(57) **Abrégé**

L'invention a trait à un dispositif d'éclairage (2) comprenant un module d'éclairage (4) monté mobile par rapport à deux axes de pivotement (34, 36). Une surface support (38) est équipée d'un système anti vibration (24) constitué d'une tige (28) rétractable au moyen d'un électroaimant (30). L'extrémité de la tige (28) coopère avec une surface de contact (26) reliée au module d'éclairage (4). Cette surface est généralement plane et perpendiculaire à la tige (28). La tige (28) assure un soutien selon l'axe z ainsi qu'un effort de friction dans un plan x-y, ces deux mesures contribuant à un amortissement des vibrations du module d'éclairage et, partant, à une diminution voire annulation du scintillement du faisceau d'éclairage.

## Description

L'invention a trait à un dispositif d'éclairage dont le faisceau d'éclairage est réglable. Plus particulièrement l'invention a trait à un projecteur comprenant un module d'éclairage, un support du module, le module étant mobile par rapport au support.

Des dispositifs d'éclairage comprenant un ou plusieurs module d'éclairage montés mobiles par rapport au boîtier sont connus notamment du document de brevet EP 0 816 749 A1. Ce document divulgue en effet un ensemble projecteur comprenant un premier projecteur avec un réflecteur principal monté sur trois points d'appui, un actionneur linéaire pour déplacer l'un de ces points d'appui entre une position de croisement et une position de route, et un second projecteur allumé en position de route. Une platine commune reçoit le premier et le second projecteur, la platine étant elle-même montée sur trois points d'appui par rapport au boîtier. Des moyens de réglage permettent d'ajuster l'orientation de la platine en site et en azimut. L'actionneur est monté entre la platine et le réflecteur principal de manière à ce que le déplacement sélectif s'opère dans un référentiel lié à la platine.

Le document de brevet EP 0 791 780 A1 divulgue également un projecteur comprenant un module d'éclairage monté mobile par rapport au boîtier. Le module est monté sur trois points d'appui disposés aux trois sommets d'un triangle. Au moins un des trois points d'appui est mobile en translation grâce à un actionneur linéaire.

Dans le cas de l'enseignement des deux documents cités ci-avant, les réglages auxquels les modules sont soumis sont de nature à modifier la fonction d'éclairage. De manière plus courante, le réglage du module d'un dispositif d'éclairage peut être de nature corrective, à savoir destiné à corriger l'orientation du faisceau d'éclairage notamment en azimut ou horizontalement ainsi que verticalement, en fonction de variations d'orientation du support ou boîtier, comme par exemple lors de variations du chargement du véhicule équipé du dispositif d'éclairage.

En fonction de la construction et notamment du poids du module d'éclairage mobile, plus particulièrement du réflecteur et de la présence éventuelle d'une lentille, des problèmes de scintillement peuvent apparaître. En effet, le montage mobile du module peut être à l'origine de vibrations du module notamment lorsque le véhicule roule sur des revêtements de route partiellement dégradés. Le scintillement est généré essentiellement par des vibrations dans une direction généralement verticale. Les possibilités de réglage du module d'éclairage ont par conséquent un impact potentiel sur la stabilité du faisceau d'éclairage.

Le document de brevet DE 26 51 912 A1 a trait à un dispositif d'éclairage pour plafond de bâtiment où le module est orientable par rapport à un axe de pivot et présentant des moyens de blocage du module dans une position déployée. Ces moyens de blocage consistent essentiellement en un frein à friction agissant sur une tige articulée sur le module. Ce dispositif ne présente pas de solution adaptée aux dispositifs d'éclairage pour véhicule des documents cités précédemment.

Le document de brevet JP 57-191141 a trait à un rétroviseur de véhicule, plus particulièrement aux problèmes de vibrations que peut subir le miroir orientable d'un rétroviseur. A cet effet, le miroir comprend une lamelle métallique flexible en contact avec une surface du boîtier du rétroviseur. Ce contact avec friction joue un rôle d'amortissement de vibrations. Un électroaimant est disposé dans le boîtier en vue d'exercer une force magnétique sur la lamelle et de la libérer de son contact avec le boîtier lors des opérations de réglage du miroir. L'électroaimant est ensuite désactivé une fois l'opération de réglage du miroir terminée. Cette solution est d'une part exclusivement décrite en relation avec un rétroviseur et non un dispositif d'éclairage, et d'autre part n'est pas facilement applicable à un module d'éclairage mobile en raison de l'absence de place pour disposer l'électroaimant.

L'invention a pour objectif de proposer un dispositif d'éclairage palliant au moins un des problèmes sus mentionnés. Plus particulièrement, l'invention a pour objection de proposer un dispositif d'éclairage avec module réglable, palliant le problème de scintillement lié aux vibrations du module.

L'invention a pour objet un dispositif d'éclairage, notamment pour véhicule automobile, comprenant : un module d'éclairage avec un support de source lumineuse et des moyens optiques aptes à réfléchir les rayons lumineux émis par la source lumineuse en un faisceau d'éclairage ; un support de module, ledit module étant monté mobile par rapport audit support; remarquable en ce qu'il comprend, en outre, un élément monté mobile en translation sur le support de module et dont une extrémité coopère par contact avec une surface dudit module de manière à stabiliser la position dudit module par rapport audit support.

Ce contact constitue une solution anti-vibration dans la mesure où il assure un soutien du module d'éclairage selon une direction correspondant à la direction de translation de l'élément mobile ainsi qu'une limitation des mouvements oscillatoires du module dans un plan perpendiculaire à la direction de translation de l'élément mobile. L'élément mobile est en effet guidé radialement de manière à rester centré sur sa direction de translation et à pouvoir reprendre des efforts radiaux. L'extrémité de l'élément mobile peut en effet coopérer par engagement avec la surface, comme par exemple une surface structurée, par friction avec une pression de contact, ou encore une combinaison d'engagement partiel et de friction.

Selon un mode avantageux de l'invention, l'élément mobile en translation coopère avec la surface du module par contact avec pression. Ce mode de réalisation est particulièrement intéressant car il ne requiert pas de structurer la surface et autorise une infinité de positions relatives entre la surface de contact et l'élément mobile.

Selon un autre mode avantageux de l'invention, l'élément mobile en translation est actionné au moyen d'un électro-aimant.

Selon un encore autre mode avantageux de l'invention, l'élément mobile en translation est forcé dans une position de contact ou de contact avec pression avec la surface de contact du module d'éclairage par des moyens élastiques et en ce que l'électro-aimant sert à éloigner ledit élément mobile de ladite position de contact contre l'effort des moyens élastiques et à permettre un déplacement dudit module.

Selon un autre mode avantageux de l'invention, l'élément mobile est allongé et généralement cylindrique.

Selon un autre mode avantageux de l'invention, le support de module constitue au moins partiellement un boîtier du dispositif d'éclairage.

Selon un autre mode avantageux de l'invention, la surface de contact du module d'éclairage est généralement plane et généralement perpendiculaire dans une tolérance de ± 20°, préférentiellement ± 15°, plus préférentiellement encore ± 10°, à la direction de translation dudit élément mobile. Cette mesure de perpendicularité assure un soutien et un éventuel effet de friction qui sont optimaux. La planéité de la surface de contact est relative et peut présenter une tolérance de 5 mm, préférentiellement 4 mm, plus préférentiellement 3 mm, plus préférentiellement encore 2 mm, et plus préférentiellement encore 1 mm.

Selon un autre mode avantageux de l'invention, le module d'éclairage est monté pivotant sur le support par rapport à au moins un axe de pivotement, préférentiellement par rapport à deux axes de pivotement disposés approximativement perpendiculairement. Cette perpendicularité n'est pas nécessaire mais avantageuse. Les axes peuvent former un angle compris entre 70° et 110°, préférentiellement entre 80° et 100°.

Selon un autre mode avantageux de l'invention, le module d'éclairage est monté sur le support au moyen d'au moins trois points de liaison à rotule dont au moins un est mobile en translation.

Selon un autre mode avantageux de l'invention, la direction de translation du ou des points de liaison mobiles en translation est généralement perpendiculaire au plan passant par les trois points de liaison à rotule. Ici aussi une tolérance de perpendicularité de 20°, préférentiellement de 10°, plus préférentiellement de 5° peut être acceptée.

Selon un autre mode avantageux de l'invention, les trois points de liaison à rotule forment deux axes de pivotement sécants, préférentiellement généralement perpendiculaires.

Selon un autre mode avantageux de l'invention, l'axe de translation de l'élément mobile est généralement à distance du ou des axes de pivotement du module d'éclairage. Cette distance est préférentiellement d'au moins 10 mm, plus préférentiellement d'au moins 20 mm, plus préférentiellement encore d'au moins 30 mm. Elle assure un déplacement relatif important entre la surface de contact et l'élément mobile en cas de vibration du module d'éclairage.

Selon un autre mode avantageux de l'invention, le module d'éclairage comprend un enjoliveur comprenant la surface de contact.

Selon un autre mode avantageux de l'invention, la surface de contact est disposée à la périphérie du module d'éclairage, est généralement plane et généralement parallèle à la direction principale du faisceau d'éclairage dans une tolérance de ± 10°, préférentiellement ± 5°.

Selon un autre mode avantageux de l'invention, la surface de contact est disposée généralement horizontalement sous le module d'éclairage.

D'autres caractéristiques et avantages de la présente invention seront mieux compris à l'aide de la description et des dessins parmi lesquels :
La figure 1 est une vue en perspective d'un dispositif d'éclairage conforme à l'invention.
La figure est une vue en élévation de l'enjoliveur du dispositif de la figure 1.
Les figures 3(a) à 3(c) sont des vues de côté de l'enjoliveur du dispositif de la figure 1 dans différentes positions de réglage horizontal du faisceau.
Les figures 4(a) à 4(c) sont des vues de côté de l'enjoliveur du dispositif de la figure 1 dans différentes positions de réglage vertical du faisceau.

Dans la description qui va suivre, de nombreuses caractéristiques géométriques du dispositif d'éclairage vont être définies par référence à des notions géométriques telles que des points d'appui et des axes de pivotement d'un module d'éclairage, un plan défini par ces points et/ou ces axes, la direction principale de projection du module d'éclairage, etc., et ce pour des raisons de clarté d'exposé. Dans la réalité, la position de ces différentes notions ou de ces différents repères géométriques peuvent dévier quelque peu des correspondances qui vont être décrites, et ce en raison d'une part de tolérance de fabrication, et d'autre part de la non nécessité d'une parfaite correspondance. L'exposé qui va suivre ne peut donc être interprété comme limitant de manière stricte l'invention à des correspondances géométriques parfaites dans la mesure où une déviance de ces correspondances garanti toujours le principe et les avantages de l'invention.

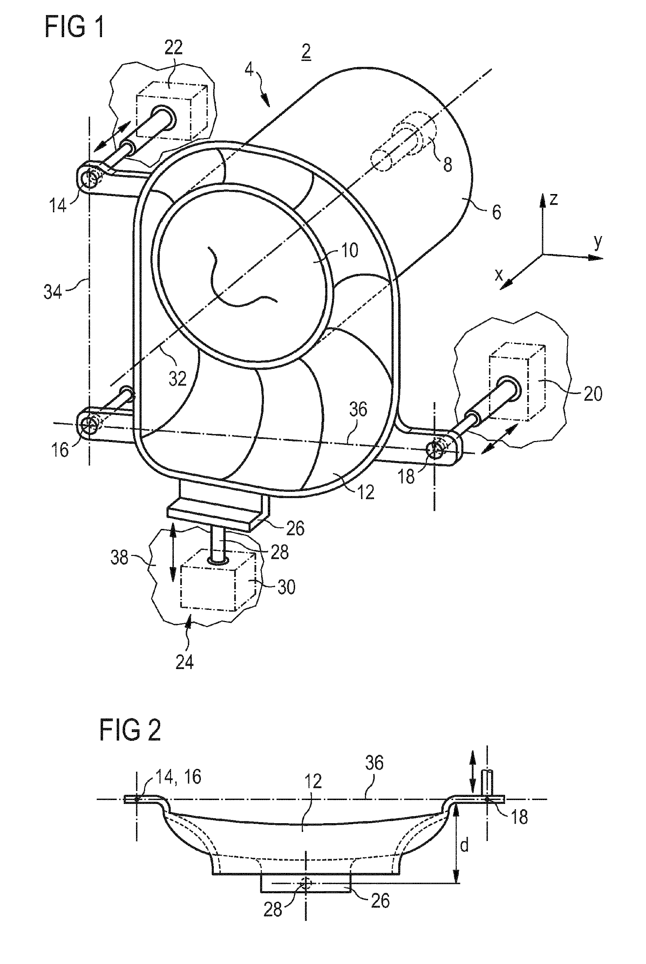

Le dispositif d'éclairage 2 illustré à la figure 1 consiste essentiellement en un boîtier (non représenté) renfermant ou supportant un module d'éclairage 4. Le module d'éclairage 4 comprend de manière classique un réflecteur 6, une source lumineuse 8 et une lentille 10. La lentille est entourée d'un enjoliveur 12 servant de liaison du module d'éclairage au boîtier. En effet, l'enjoliveur 12 comprend trois pattes de fixation du module 4 aux différentes parois du boîtier. Une première patte forme un point de liaison fixe à rotule 16 avec le boîtier. Une deuxième patte forme un deuxième point de liaison mobile à rotule 14 avec le boîtier. Ce point de fixation est mobile en translation selon l'axe x au moyen d'un actuateur linéaire électrique 22. Une troisième patte forme un troisième point de liaison mobile à rotule 18 avec le boîtier. Similairement au point de liaison 14, ce point de fixation est mobile en translation selon l'axe x au moyen d'un actuateur linéaire électrique 20.

Les liaisons à rotule sont assurées par des capsules de fixation bien connues de l'homme de métier.

Comme cela est illustré à la figure 1, ces trois points de liaison ou fixation forment un triangle dont deux sommets sont mobiles en translation selon approximativement une perpendiculaire au plan formé par le triangle en question. Les points 14 et 16 forment un premier côté du triangle et un premier axe de pivotement 34. Les points 16 et 18 forment un deuxième côté du triangle et un deuxième axe de pivotement 36. Ce deuxième axe de pivotement est préférentiellement généralement perpendiculaire au premier.

L'axe longitudinal et de projection 32 du module d'éclairage 4 est généralement perpendiculaire au plan formé par les trois points de liaison. Cependant une déviation d'une certaine tolérance notamment de l'ordre de 30°, préférentiellement de 20° est acceptable. Une telle déviation permet en effet d'assurer un réglage du faisceau horizontalement (azimut) et verticalement.

L'enjoliveur 12 comprend à sa base une excroissance en forme de « L » ou de patte formant une surface 26 dirigée vers le bas et destinée à entrer en contact avec un système anti-vibration 24 mobile en translation selon un direction généralement verticale. La surface est généralement plane et d'une rugosité raisonnable. Une tige 28 est supportée par un électroaimant 30 disposé sur un platine 38 du boîtier et forcée vers le haut par des moyens élastiques tel un ressort intégré à l'électroaimant.

En l'absence de courant parcourant l'électroaimant, le ressort (non représenté) pousse la tige 28 vers le haut en contact de pression avec la surface 26. Ce contact assure d'une part un soutien mécanique du module d'éclairage essentiellement selon l'axe z, et d'autre part un effort de friction dans le plan de la surface 26 qui contribue également à stabiliser le module essentiellement dans le plan de la surface, c'est-à-dire le plan défini par les axes x et y, et partiellement selon la direction z en raison de l'éloignement de la surface 26 par rapport à l'axe de pivotement horizontal 36 dans un plan généralement horizontal.

La tige 28 est guidée radialement de manière à rester centrée sur sa direction de translation et à pouvoir reprendre des efforts radiaux.

La vue en élévation de l'enjoliveur du module à la figure 2 illustre bien la position de la surface 26 dans un plan horizontal ou x-y. La distance d entre la zone de contact de la tige 28 et l'axe de pivotement horizontal 36 formé par les points de liaison 16 et 18 y est bien apparente.

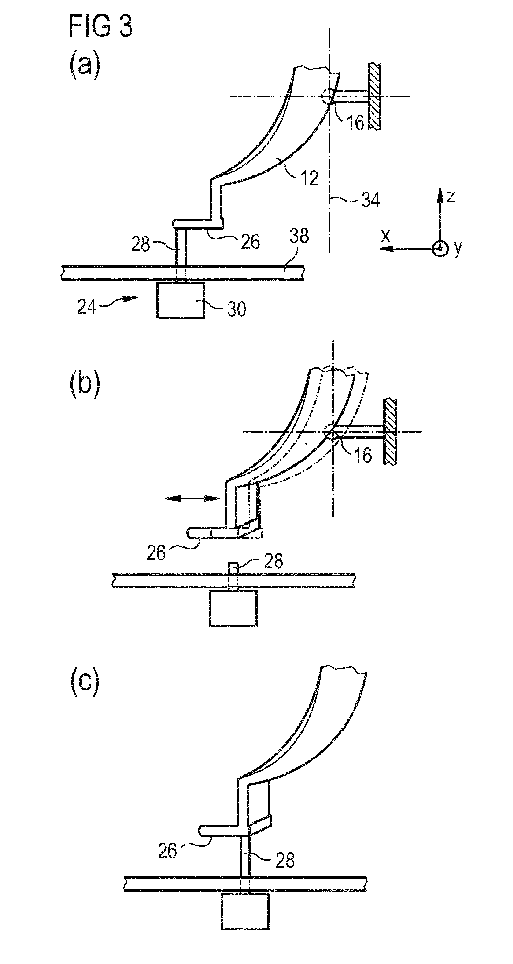

Les figures 3(a) à 3(c) sont des vues de côté de la partie inférieure de l'enjoliveur 12 avec la surface de contact 26. Elles illustrent les différentes étapes du mouvement du module par rapport à l'axe de pivotement vertical (référence 34 à la figure 1). A la figure 3(a), l'enjoliveur est représenté dans une première position. La tige 28 est en contact avec une zone avant de la surface 26. A la figure 3(b), l'électroaimant est parcouru par un courant et rétracte la tige 28. Le module est déplacé vers l'avant par l'action de l'actuateur linéaire agissant sur le point de liaison 18 (voir figure 1). La position initiale de l'enjoliveur est illustrée en trait pointillé et la position finale après mouvement est illustrée en trait continu. A la figure 3(c), l'électroaimant n'est plus sous tension et la tige remonte sous l'effet du ressort et entre en contact avec une zone arrière de la surface 26.

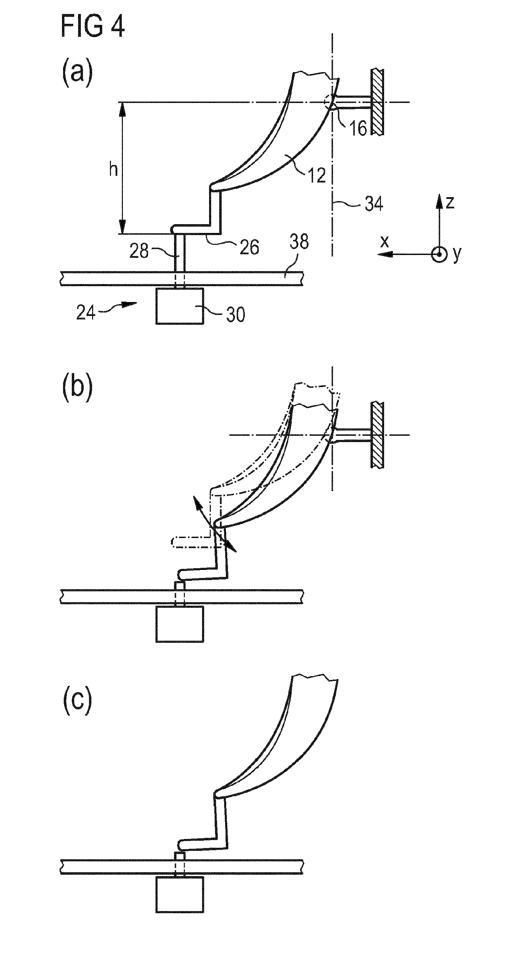

Les figures 4(a) à 4(c) sont des vues similaires aux vues 3(a) à 3(c), illustrant les différentes étapes du mouvement du module par rapport à l'axe de pivotement cette fois ci horizontal (référence 36 à la figure 1). La figure 4(a) illustre une première position de l'enjoliveur 12. La tige 28 est en contact avec une zone avant de la surface 26. L'effet de levier de la surface 26 par rapport à l'axe de pivotement horizontal (représenté par le point de liaison 16) est représenté par la distance h. En effet, toute oscillation du module et, partant de l'enjoliveur, dans un plan généralement vertical, plus particulièrement encore autour de l'axe de pivotement horizontal va générer un déplacement de la surface 26 avec une composante selon l'axe x qui sera prépondérante. Outre l'effet de soutien du module selon l'axe z, le système anti-vibration, par l'effet de friction entre le sommet de la tige 28 et la surface 26, va amortir au moins une grande partie des oscillations dans le plan x-z. A la figure 4(b), l'électroaimant est sous tension et rétracte la tige 28. Le module est basculé vers le bas par l'action de l'actuateur linéaire agissant sur le point de liaison 14 (voir figure 1). La position initiale de l'enjoliveur est illustrée en trait pointillé et la position finale après mouvement est illustrée en trait continu. A la figure 4(c), l'électroaimant n'est plus sous tension et la tige remonte sous l'effet du ressort et entre en contact avec la surface 26 dans une zone proche de la zone de contact de la tige dans la position initiale du module et située plus en avant. La tige 28 reste partiellement enfoncée car la surface de contact 26 s'est rapprochée de la surface support 38. Malgré l'enfoncement partiel, la tige assure la double fonction de soutien et de contact à friction, similairement à la première position du module.

Il est à noter que le système anti-vibration 24 constitué de la tige 28, de l'électroaimant et des moyens élastiques peut être conçu pour pouvoir être libéré manuellement. En effet, lors du montage d'un projecteur sur un véhicule dans le cadre d'une chaîne de montage notamment, il peut être nécessaire de procéder à un réglage initial du projecteur en agissant notamment sur des moyens de réglage manuels. Etant donné que ce réglage initial n'est pas supposé être reproduit ultérieurement et que, de plus, le réseau électrique du véhicule peut ne pas encore opérationnel au moment de ce réglage, il est en effet utile que le système puisse être désarmé et réarmé manuellement, comme par exemple au moyen d'un dispositif à vis accessible depuis l'extérieur de la surface support du boîtier.

Il est également à noter que la tige du système anti-vibration peut prendre diverses formes. Son extrémité peut en effet présenter une forme différente, avec par exemple une surface plus importante ou encore une forme arrondie. La surface de contact peut également présenter diverses formes et également diverses rugosités. Elle peut présenter un relief avec une multitude de creux avec lesquels la tige pourra coopérer.

Il est également à noter que le système anti-vibration et la surface de contact ne doivent pas nécessairement être disposés à une partie inférieure du dispositif d'éclairage. En effet, l'absorption des vibrations par l'effet de friction entre la tige et la surface peut être assurée par de nombreuses autres positions de la tige et de la surface.

Il est également à noter que le sens de travail du système anti-vibration pourrait être inversé, à savoir qu'il doive être mis sous tension pour assurer son rôle anti-vibration et hors tension pour permettre le déplacement du module d'éclairage.

## Revendications

1. Dispositif d'éclairage (2), notamment pour véhicule automobile, comprenant :
un module d'éclairage (4) avec un support de source lumineuse (8) et des moyens optiques (6) aptes à réfléchir les rayons lumineux émis par la source lumineuse en un faisceau d'éclairage ;
un support de module (38), ledit module étant monté mobile par rapport audit support;
**caractérisé en ce qu'**il comprend, en outre,
un élément (28) monté mobile en translation sur le support de module (38) et dont une extrémité coopère par contact avec une surface de contact (26) dudit module (4) de manière à stabiliser la position dudit module par rapport audit support.

2. Dispositif d'éclairage selon la revendication précédente, **caractérisé en ce que** l'élément mobile en translation (28) coopère avec la surface de contact (28) du module par contact avec pression.

3. Dispositif d'éclairage selon l'une des revendications précédentes, **caractérisé en ce que** l'élément mobile en translation (28) est actionné au moyen d'un électro-aimant (30).

4. Dispositif d'éclairage selon la revendication précédente, **caractérisé en ce que** l'élément mobile en translation (28) est forcé dans une position de contact ou contact avec pression avec la surface de contact (26) du module d'éclairage (4) par des moyens élastiques et **en ce que** l'électro-aimant (30) sert à éloigner ledit élément mobile (28) de ladite position de contact contre l'effort des moyens élastiques et à permettre un déplacement dudit module (4).

5. Dispositif d'éclairage selon l'une des revendications précédentes, **caractérisé en ce que** l'élément mobile (28) est allongé et généralement cylindrique.

6. Dispositif d'éclairage selon l'une des revendications précédentes, **caractérisé en ce que** le support de module (38) constitue au moins partiellement un boîtier du dispositif d'éclairage.

7. Dispositif d'éclairage selon l'une des revendications précédentes, **caractérisé en ce que** la surface de contact (28) du module d'éclairage (4) est généralement plane et généralement perpendiculaire dans une tolérance de ± 20°, préférentiellement ± 15°, plus préférentiellement encore ± 10°, à la direction de translation dudit élément mobile en translation (28).

8. Dispositif d'éclairage selon l'une des revendications précédentes, **caractérisé en ce que** le module d'éclairage (4) est monté pivotant sur le support par rapport à au moins un axe de pivotement, préférentiellement par rapport à deux axes de pivotement (34, 36) disposés approximativement perpendiculairement.

9. Dispositif d'éclairage selon l'une des revendications précédentes, **caractérisé en ce que** le module d'éclairage (4) est monté sur le support au moyens d'au moins trois points de liaison à rotule (14, 16, 18) dont au moins un (14, 18) est mobile en translation.

10. Dispositif d'éclairage selon la revendication précédente, **caractérisé en ce que** la direction de translation du ou des points de liaison mobiles en translation (14, 18) est généralement perpendiculaire au plan passant par les trois points de liaison à rotule (14, 16, 18).

11. Dispositif d'éclairage selon l'une des revendications 9 et 10, **caractérisé en ce que** les trois points de liaison à rotule (14, 16, 18) forment deux axes de pivotement sécants (34, 36), préférentiellement généralement perpendiculaires.

12. Dispositif d'éclairage selon l'une des revendications 8 et 11, **caractérisé en ce que** l'axe de translation de l'élément mobile (28) est généralement à distance du ou des axes de pivotement (34, 36) du module d'éclairage.

13. Dispositif d'éclairage selon l'une des revendications précédentes, **caractérisé en ce que** le module d'éclairage (4) comprend un enjoliveur (12) comprenant la surface de contact (28).

14. Dispositif d'éclairage selon l'une des revendications précédentes, **caractérisé en ce que** la surface de contact (28) est disposée à la périphérie du module d'éclairage (4), est généralement plane et généralement parallèle à la direction principale (32) du faisceau d'éclairage dans une tolérance de ± 10°, préférentiellement ± 5°.

15. Dispositif d'éclairage selon la revendication précédente, **caractérisé en ce que** la surface de contact (28) est disposée généralement horizontalement.

16. Dispositif d'éclairage selon la revendication précédente, **caractérisé en ce que** la surface de contact (28) est disposée sous le module d'éclairage (4).
